# EUROPÄISCHE PATENTSCHRIFT

(11) **EP 2 338 692 B1**
(45) Veröffentlichungstag und Bekanntmachung des Hinweises auf die Patenterteilung: **12.06.2019**
(21) Anmeldenummer: 10015932.6
(22) Anmeldetag: 22.12.2010
(51) Int. Cl.: G02B 27/22, H04N 1/405, G02B 3/00, B42D 25/342, B42D 25/324, B42D 25/30

(54) **VERFAHREN ZUR HERSTELLUNG EINER MIKROOPTISCHEN DARSTELLUNGSANORDNUNG**
METHOD FOR PRODUCING A MICROOPTICAL IMAGING ASSEMBLY
PROCÉDÉ DE FABRICATION D'UN AGENCEMENT DE REPRÉSENTATION MICRO-OPTIQUE

(30) Priorität: 23.12.2009 DE 102009060191
(43) Veröffentlichungstag der Anmeldung: 29.06.2011
(73) Patentinhaber: Giesecke+Devrient Currency Technology GmbH, 81677 München (DE)
(72) Erfinder: Fuhse, Christian, 83624 Otterfing (DE)

(56) Entgegenhaltungen:
- WO-A2-2008/000402
- DE-A1- 3 639 029
- DE-A1- 4 124 828
- US-A- 5 489 991

## Beschreibung

Die Erfindung betrifft ein Verfahren zur Herstellung einer mikrooptischen Darstellungsanordnung für die Darstellung eines Halbton-Sollbilds mit drei oder mehr Helligkeitsstufen. Die Erfindung betrifft ferner eine entsprechend hergestellte mikrooptische Darstellungsanordnung sowie einen Datenträger mit einer derartigen Darstellungsanordnung.

Datenträger, wie etwa Wert- oder Ausweisdokumente, aber auch andere Wertgegenstände wie etwa Markenartikel werden zur Absicherung oft mit Sicherheitselementen versehen, die eine Überprüfung der Echtheit des Datenträgers gestatten und die zugleich als Schutz vor unerlaubter Reproduktion dienen. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, Kreditkarten, Gesundheitskarten, sowie Produktsicherungselemente wie Etiketten, Siegel, Verpackungen und dergleichen. Der Begriff "Datenträger" schließt im Folgenden alle derartigen Gegenstände, Dokumente und Produktsicherungsmittel ein.

Die Sicherheitselemente können beispielsweise in Form eines in eine Banknote eingebetteten Sicherheitsfadens, eines Aufreißfadens für Produktverpackungen, eines aufgebrachten Sicherheitsstreifens, einer Abdeckfolie für eine Banknote mit einer durchgehenden Öffnung oder eines selbsttragenden Transferelements ausgebildet sein, wie etwa einem Patch oder einem Etikett, das nach seiner Herstellung auf ein Wertdokument aufgebracht wird.

Eine besondere Rolle spielen Sicherheitselemente mit optisch variablen Elementen, die dem Betrachter unter unterschiedlichen Betrachtungswinkeln einen unterschiedlichen Bildeindruck vermitteln, da diese selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Aus der Druckschrift US 5 712 731 A ist die Verwendung einer Moire-Vergrößerungsanordnung als Sicherheitsmerkmal bekannt. Die dort beschriebene Sicherheitsvorrichtung weist eine regelmäßige Anordnung von im Wesentlichen identischen gedruckten Mikrobildern mit einer Größe bis zu 250 µm auf, sowie eine regelmäßige zweidimensionale Anordnung von im Wesentlichen identischen sphärischen Mikrolinsen. Die Mikrolinsen-Anordnung weist dabei im Wesentlichen dieselbe Teilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.

Die prinzipielle Funktionsweise derartiger Moire-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, das in diesem Fall als vergrößertes und gegebenenfalls gedrehtes Bild der wiederholten Elemente des Bildrasters erscheint.

Um mit Moire-Vergrößerungsanordnungen Sollbilder mit Graustufen oder Farbabstufungen darstellen zu können, ist in der Druckschrift WO 2008/000402 A2 vorgeschlagen worden, eine gegebene Darstellung in verschiedene Bildelemente zu zerlegen, denen jeweils ein bestimmter Grauwert zugeordnet ist. Dann werden jeweils N Zellen des Mikrobildrasters zu so genannten Mikrobildbereichen zusammengefasst. Für jeden Mikrobildbereich werden N unterschiedliche Mikrobilder berechnet. Abhängig von der jeweiligen Graustufe werden die unterschiedlichen Bildelemente in einer bestimmten Anzahl der Mikrobilder Schwarz bzw. Weiß gefüllt. Soll ein Bildelement beispielsweise mit einem Grauwert von 50% wiedergegeben werden, so ist es in 50% der Mikrobilder schwarz, in den anderen 50% der Mikrobilder weiß gefüllt. Da die Mikrobildbereiche maximal 300 µm groß sein sollen, sieht das menschliche Auge im genannten Beispiel keine "schwarzen" und "weißen" Bildbereiche, sondern lediglich den mittleren Grauwert von hier 50%.

Dieses Verfahren erlaubt die Wiedergabe von N+1 unterschiedlichen Graustufen, da jedes Bildelement in keinem, einem oder bis zu allen N Mikrobildern eines Mikrobildbereichs schwarz dargestellt werden kann. Je größer N, desto mehr Graustufen lassen sich erzeugen. Eine sehr große Anzahl von N erfordert aber auch entsprechend große Mikrobildbereiche, so dass letztlich die Auflösung des vom Betrachter wahrgenommenen Bildes leidet. Geht man beispielsweise von 30 µm großen Mikrobildern auf einem quadratischen Raster aus, so ergibt sich aus einer Forderung nach 100 Graustufen bereits eine Größe der Mikrobildbereiche von 10 x 10 Mikrobildern bzw. 300 µm x 300 µm, was dem menschlichen Auge bereits als Pixelstruktur sichtbar wird. Eine größere Anzahl von Graustufen, wie den in vielen Bereichen üblichen 256 Graustufen, ist damit nur auf Kosten einer deutlich sichtbaren Pixelstruktur möglich. Eine geringere Anzahl von Graustufen kann aber gerade bei der Darstellung kontinuierlicher Graustufenverläufe zu einer Konturierung (sichtbaren Sprüngen der Grauwerte) führen. Bei diesem Verfahren muss also zwischen entweder einer hohen Anzahl an Graustufen mit deutlich sichtbarer Pixelstruktur und hoher Auflösung bei nicht oder wenig sichtbarer Pixelstruktur abgewogen werden.

Die Erzeugung von Pseudo-Halbtonbildern durch Vergleich des darzustellenden Halbtonbildes mit Schwellwertmatrizen mit unterschiedlichen Schwellwerten an den einzelnen Matrixpunkten ist in der Druckschrift DE 41 24 828 A1 beschrieben.

Davon ausgehend liegt der Erfindung die Aufgabe zugrunde, die Nachteile des Standes der Technik zu vermeiden und insbesondere, eine mikrooptischen Darstellungsanordnung sowie ein vorteilhaftes Verfahren zu ihrer Herstellung anzugeben, mit der Halbton-Sollbilder mit sowohl einer hohen Anzahl an Graustufen als auch einer hohen Auflösung dargestellt werden können.

Diese Aufgabe wird durch das Verfahren mit den Merkmalen des Hauptanspruchs gelöst. Eine mikrooptische Moire-Vergrößerungsanordnung und ein entsprechender Datenträger sind in den nebengeordneten Ansprüchen angegeben. Weiterbildungen der Erfindung sind Gegenstand der Unteransprüche.

Die Erfindung enthält insbesondere ein Verfahren zur Herstellung einer mikrooptischen Darstellungsanordnung für die Darstellung eines Halbton-Sollbilds mit n > 2 Helligkeitsstufen, bei dem:
a) ein Motivbild erzeugt wird, das in eine Mehrzahl von periodisch oder zumindest lokal periodisch angeordneten Motiv-Rasterzellen eingeteilt wird, in denen jeweils abgebildete und Schwellwert-transformierte Bereiche des Halbton-Sollbilds angeordnet werden,
   wobei die abgebildeten und Schwellwert-transformierten Bereiche des Halbton-Sollbilds mit Unterbereichen ausgebildet werden, die eine von k Ausprägungen einer vorgegebenen optischen Eigenschaft enthalten, wobei 1 < k < n gilt,
b) ein Betrachtungsraster aus einer Mehrzahl von Betrachtungsrasterelementen erzeugt wird, das bei Betrachtung des Motivbilds das Halbton-Sollbild mit n Helligkeitsstufen aus den in den Zellen angeordneten abgebildeten und Schwellwert-transformierten Bereichen rekonstruiert,
   wobei zur Erzeugung des Motivbilds
a1) zumindest ein Halbtongrundraster mit Grund-Rasterzellen vorgegeben wird, die jeweils einen von zumindest zwei Halbton-Schwellwerten enthalten,
a2) eine gewünschte optische Eigenschaft mit k Ausprägungen vorgegeben wird, mit 1 < k < n,
a3) das zumindest eine Halbtongrundraster periodisch den Rasterzellen des Motivbilds überlagert wird, so dass jeder Grund-Rasterzelle jedes Halbtongrundrasters zumindest eine von der Grund-Rasterzelle überlagerte Motiv-Rasterzelle zugeordnet wird,
a4) für jede Motiv-Rasterzelle ein zugehöriger abgebildeter Bereich des Halbton-Sollbilds mit n Helligkeitsstufen bestimmt wird, und
a5) für die Schwellwert-Transformation jeweils die Helligkeitsstufen der abgebildeten Bereiche der überlagerten Motiv-Rasterzellen mit dem Halbton-Schwellwert der Grund-Rasterzelle verglichen werden, die abgebildete Bereiche der überlagerten Motiv-Rasterzellen entsprechend dem Vergleichsergebnis in Unterbereiche unterteilt werden, denen jeweils eine der k Ausprägungen der optischen Eigenschaft zugeordnet wird, und jeder der Unterbereiche mit der zugeordneten Ausprägung der optischen Eigenschaft versehen wird.

Fallen Halbtongrundraster und Motivraster nicht zusammen, so können in Schritt a3) mehrere Motiv-Rasterzellen von einer Grund-Rasterzelle überlagert sein. In Schritt a5) werden in diesem Fall natürlich jeweils die abgebildeten Bereiche des jeweils überlagerten Teils der Motiv-Rasterzellen entsprechend dem Vergleichsergebnis in Unterbereiche unterteilt.

In der Praxis hat sich herausgestellt, dass besonders gute Ergebnisse erzielt werden, wenn das Halbtongrundraster entweder mit dem Motivraster oder mit dem Betrachtungsraster zusammenfällt. Für den Fall, dass das Halbtongrundraster mit dem Motivraster zusammenfällt, ist umgekehrt auch jeder Motiv-Rasterzelle eine Grund-Rasterzelle zugeordnet. Die Schritte a3) bis a5) lasen sich dann auch als Schritte a3M) bis a5M) wie folgt formulieren:
a3M) das zumindest eine Halbtongrundraster periodisch den Rasterzellen des Motivbilds überlagert wird, so dass jeder Motiv-Rasterzelle eine Grund-Rasterzelle zumindest eines Halbtongrundrasters zugeordnet wird,
a4M) für jede Motiv-Rasterzelle ein zugehöriger abgebildeter Bereich des Halbton-Sollbilds mit n Helligkeitsstufen bestimmt wird, und
a5M) für die Schwellwert-Transformation die Helligkeitsstufen des abgebildeten Bereichs mit dem Halbton-Schwellwert der zugeordneten Grund-Rasterzelle des zumindest einen Halbtongrundrasters verglichen werden, der abgebildete Bereich entsprechend dem Vergleichsergebnis in Unterbereiche unterteilt wird, denen jeweils eine der k Ausprägungen der optischen Eigenschaft zugeordnet wird, und jeder der Unterbereiche mit der zugeordneten Ausprägung der optischen Eigenschaft versehen wird.

Über den bevorzugten Fall hinaus, dass ein Halbtongrundraster gewählt wird, das entweder mit dem Motivraster oder mit dem Betrachtungsraster zusammenfällt, ist eine allgemeine Anordnung von Halbtongrundraster und Motivraster bzw. Betrachtungsraster zwar grundsätzlich möglich, führt aber im Allgemeinen zu einem unerwünschten zusätzlichen Moire-Muster aus Halbtonraster und Betrachtungsraster, das gerade bei bewegten Motiven sehr auffällig und störend sein kann. Wird die Rasterung beispielsweise mit einem Halbtongrundraster durchgeführt, dessen Rasterzellen die 1,2-fache Größe der Zellen des Betrachtungsrasters aufweisen, so ergibt sich eine periodische Modulation der Schwellwert-Transformation, die in den nicht vollkommen weißen oder schwarzen Bildbereichen zu einer periodischen Helligkeitsmodulation des Sollbilds führen kann. Das menschliche Auge ist für derartige periodische Helligkeitsmodulationen sehr empfindlich, so dass sie in der Regel vermieden werden. Etwas anderes kann gelten, wenn eine Modulation absichtlich in das Design eingebracht werden soll, beispielsweise aus designerischen Gründen.

Vorzugsweise wird die vorgegebene optische Eigenschaft ausgewählt aus der Gruppe, die gebildet ist durch
i) Anwesenheit oder Abwesenheit einer schwarzen, grauen oder weißen Farbe,
ii) unterschiedliche Deckung einer schwarzen, grauen oder weißen Farbe,
iii) Anwesenheit oder Abwesenheit einer oder mehrerer bunter Farben,
iv) unterschiedliche Deckung einer oder mehrerer bunter Farben,
v) eine Erhöhung oder Vertiefung,
vi) ein diffraktives Gitter oder eine Mattstruktur,
vii) Subwellenlängenstrukturen, wie etwa Subwellenlängengitter oder Mottenaugenstrukturen,
viii) eine zumindest teilweise Metallisierung oder Verspiegelung, und
ix) ein Dünnfilmsystem, insbesondere ein Dünnfilmsystem, das Interferenzfarben zeigt,
x) opake bzw. nicht opake Bereiche, und
xi) Bereiche unterschiedlicher optischer Transmission.
Die vorgegebene optische Eigenschaft kann auch aus einer Kombination mehrerer der Elemente i) bis xi) gebildet werden. Beispielsweise kann die Anwesenheit oder Abwesenheit einer Farbe mit Erhöhungen oder Vertiefungen oder mit einer teilweisen Metallisierung kombiniert werden.

In einer vorteilhaften Verfahrensvariante wird eine vorgegebene optische Eigenschaft mit genau zwei unterschiedliche Ausprägungen gewählt, wird in Schritt a1) genau ein Halbtongrundraster mit Grund-Rasterzellen vorgegeben und werden die abgebildeten Bereiche in Schritt a5) in genau zwei Unterbereiche unterteilt, denen jeweils eine der zwei Ausprägungen der optischen Eigenschaft zugeordnet werden. Für die Schwellwert-Transformation werden dann mit Vorteil jeweils die Helligkeitsstufen der abgebildeten Bereiche der überlagerten Motiv-Rasterzellen mit dem Halbton-Schwellwert der Grund-Rasterzelle verglichen und die abgebildeten Bereiche der überlagerten Motiv-Rasterzellen dadurch in zwei Unterbereiche unterteilt. Die Helligkeitsstufen, die kleiner oder gleich dem Halbton-Schwellwert sind, werden einem ersten Unterbereich zugeordnet und die Helligkeitsstufen, die größer als der Halbton-Schwellwert sind, werden einem zweiten Unterbereich zugeordnet.

In einer ebenfalls vorteilhaften Variante kann als vorgegebene optische Eigenschaft die Anwesenheit oder Abwesenheit oder die unterschiedliche Deckung von Grundfarben, beispielsweise der Farben Rot, Grün und Blau oder der Farben Cyan, Magenta und Gelb oder der Farben Cyan, Magenta, Gelb und Schwarz gewählt werden. Dadurch lassen sich insbesondere Vollfarbbilder in Durchsicht bzw. in Aufsicht erzeugen.

Die Betrachtungsrasterelemente werden mit Vorteil als sphärische Linsen, asphärische Linsen, Zylinderlinsen oder ein- oder zweidimensional fokussierende Mikrohohlspiegel ausgeführt.

In einer vorteilhaften Ausgestaltung werden das Betrachtungsraster und das Raster der Motiv-Rasterzellen des Motivbilds so aufeinander abgestimmt, dass sich bei der Betrachtung ein Moire-Vergrößerungseffekt ergibt.

Die Rasterweite des Betrachtungsrasters wird zweckmäßig zwischen 5 µm und 500 µm, bevorzugt zwischen etwa 10 µm und 100 µm, besonders bevorzugt zwischen etwa 20 µm und 50 µm gewählt. Weiter werden mit Vorteil Betrachtungsrasterelemente mit einer Brennweite gewählt, die nicht größer als 500 µm, bevorzugt nicht größer als etwa 100 µm und besonders bevorzugt nicht größer als 50 µm ist. Das Motivbild ist vorzugsweise etwa in der Fokusebene der Betrachtungselemente.

Das Betrachtungsraster rekonstruiert das Halbton-Sollbild vorzugsweise mit mindestens 3, bevorzugt mit mindestens 10, besonders bevorzugt mit mindestens 100 Helligkeitsstufen, ganz besonders bevorzugt mit mindestens 200 Helligkeitsstufen.

Der Begriff der Helligkeitsstufen umfasst im Rahmen der Erfindung nicht nur Grau-Helligkeitsstufen, sondern auch Farb-Helligkeitsstufen für vorgegebene Grundfarben. Das Betrachtungsraster kann das Halbton-Sollbild daher insbesondere mit n Grau-Helligkeitsstufen oder mit n Farb-Helligkeitsstufen für vorgegebene Grundfarben rekonstruieren. Dabei können auch Sollbilder mit mehreren unterschiedlichen Farben und damit auch mit mehreren Farb-Helligkeitsstufen rekonstruiert werden, insbesondere auch Vollfarbbilder in Aufsicht oder Durchsicht.

In einer bevorzugten Gestaltung wird als Halbtongrundraster eine Schwellwertmatrix mit einer Größe von mindestens 2x2, vorzugsweise von mindestens 4x4 und besonders bevorzugt von mindestens 10x10 gewählt. Alternativ können natürlich auch nicht quadratische Schwellwertmatrizen mit ähnlich vielen Elementen verwendet werden, beispielsweise eine 3x5-Matrix oder eine 11x9-Matrix.

Die Erfindung enthält auch eine mikrooptische Darstellungsanordnung für Sicherheitspapiere, Wertdokumente und andere Datenträger, die nach dem oben beschriebenen Verfahren herstellbar ist, und die eine Rasterbildanordnung zur Darstellung eines Halbton-Sollbilds mit n > 2 Helligkeitsstufen aufweist, mit:
- einem Motivbild, das in eine Mehrzahl von periodisch oder zumindest lokal periodisch angeordneten Motiv-Rasterzellen eingeteilt ist, in denen jeweils abgebildete und Schwellwert-transformierte Bereiche des Halbton-Sollbilds angeordnet sind,
- einem Betrachtungsraster aus einer Mehrzahl von Betrachtungsrasterelementen, das bei Betrachtung des Motivbilds das Halbton-Sollbild mit n Helligkeitsstufen aus den in den Zellen angeordneten abgebildeten und Schwellwert-transformierten Bereichen rekonstruiert,
- wobei die abgebildeten und Schwellwert-transformierten Bereiche des Halbton-Sollbilds mit Unterbereichen ausgebildet sind, die eine von k Ausprägungen einer vorgegebenen optischen Eigenschaft enthalten, wobei 1 < k < n gilt, und wobei durch die Schwellwert-Transformation die Häufigkeit des Auftretens eines Bildteils des Halbton-Sollbilds in den Motiv-Rasterzellen durch die Helligkeitsstufe diese Bildteils im Halbton-Sollbild bestimmt ist.

Die Erfindung enthält ferner einen Datenträger, insbesondere ein Wert- oder Sicherheitselement mit einer in der oben beschriebenen Weise hergestellten mikrooptischen Darstellungsanordnung oder mit einer mikrooptischen Darstellungsanordnung der eben genannten Art. Bei dem Datenträger kann die mikrooptische Darstellungsanordnung insbesondere auf einer Trägerfolie vorliegen und zusammen mit dieser auf den Datenträger aufgebracht sein. Alternativ kann die mikrooptische Darstellungsanordnung auch direkt auf einem Papier-, Polymer- oder Verbundsubstrat erzeugt sein, beispielsweise durch direkten Druck des Mikrobilds, Aufbringen einer Lackschicht und Prägen der Betrachtungselemente in die Lackschicht.

Weiter kann vorgesehen sein, dass die mikrooptische Darstellungsanordnung in ein vorgegebenes Substrat eingebracht ist. Insbesondere kann sie in ein Papiersubstrat, in ein Papier mit Synthesefasern, in ein Verbundsubstrat, insbesondere mit der Schichtenfolge Folie/Papier/Folie oder Papier/Folie/Papier, oder in ein Polymersubstrat eingebracht sein. Bei mehrschichtigen Substraten kann die Darstellungsanordnung in, auf und zwischen jeder der Schichten angeordnet sein.

Der Datenträger kann auch flexibel ausgebildet sein und zur Selbstverifikation entlang einer Faltlinie faltbar sein, wobei erst im gefalteten Zustand das Motivbild und das Betrachtungsraster übereinander zu liegen kommen und das vorgegebenes Halbton-Sollmotiv zeigen.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

Es zeigen:
- Fig. 1: eine schematische Darstellung einer Banknote mit einem Transferelement nach einem Ausführungsbeispiel der Erfindung,
- Fig. 2: schematisch den Aufbau eines erfindungsgemäßen Sicherheitselements im Querschnitt,
- Fig. 3: eine stark schematische Darstellung einer Modulo-Vergrößerungsanordnung zur Erläuterung der prinzipiellen Funktionsweise mikrooptischer Darstellungsanordnungen,
- Fig. 4: zur Illustration eines Verfahrens mit Schwellwert-Transformation in
(a) eine gewünschte Ansicht mit n=5 möglichen Graustufen, in
(b) die Ansicht von Fig. 4(a) zusammen mit der Codierung der Graustufen mit den Grauwerten 0 bis 4, in
(c) ein Halbtongrundraster in Form einer Schwellwertmatix mit vier Grund-Rasterzellen, in
(d) die periodische Fortsetzung des Halbtongrundrasters von Fig. 4(c), und in
(e) das Schwellwert-transformierte Motivbild,

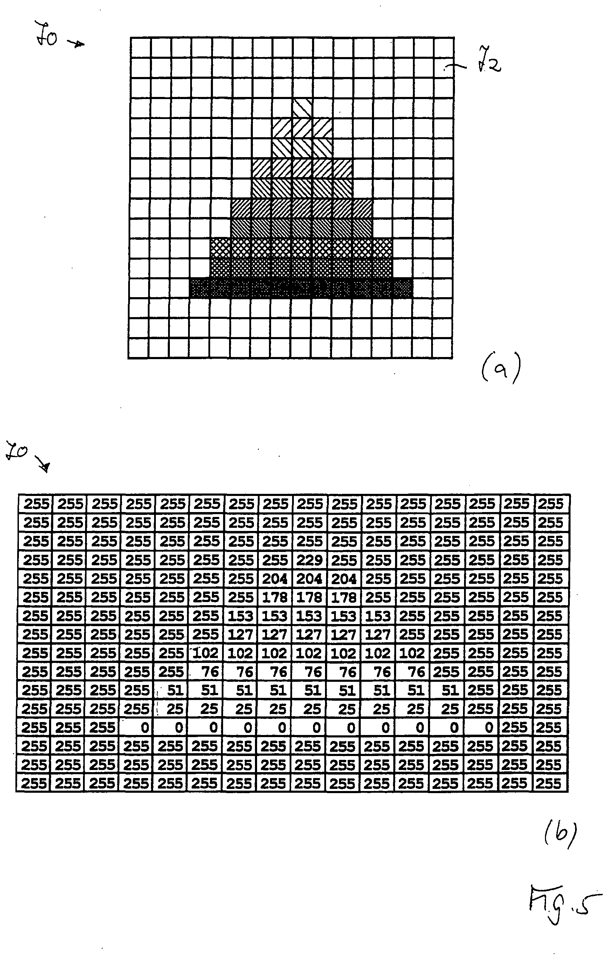

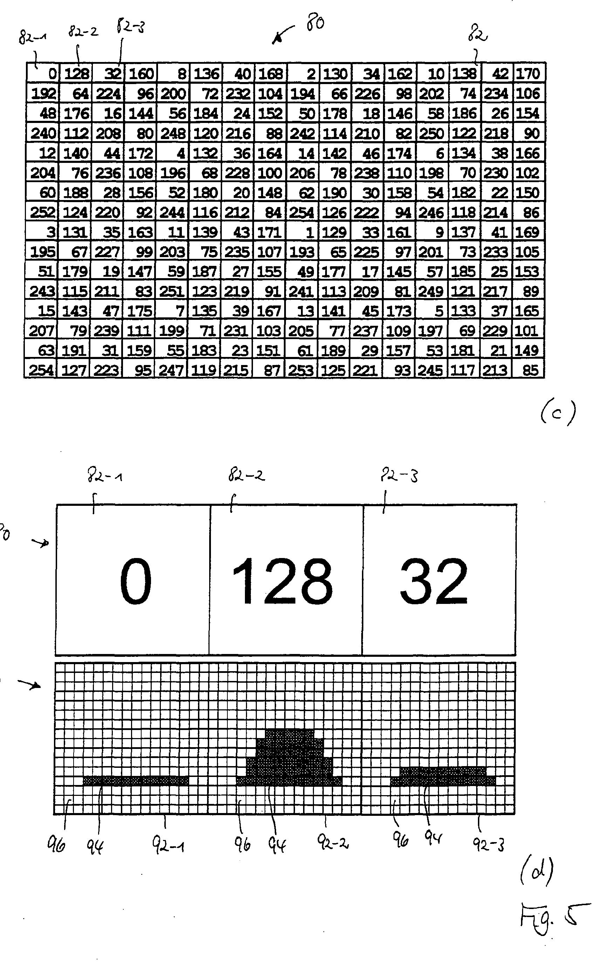

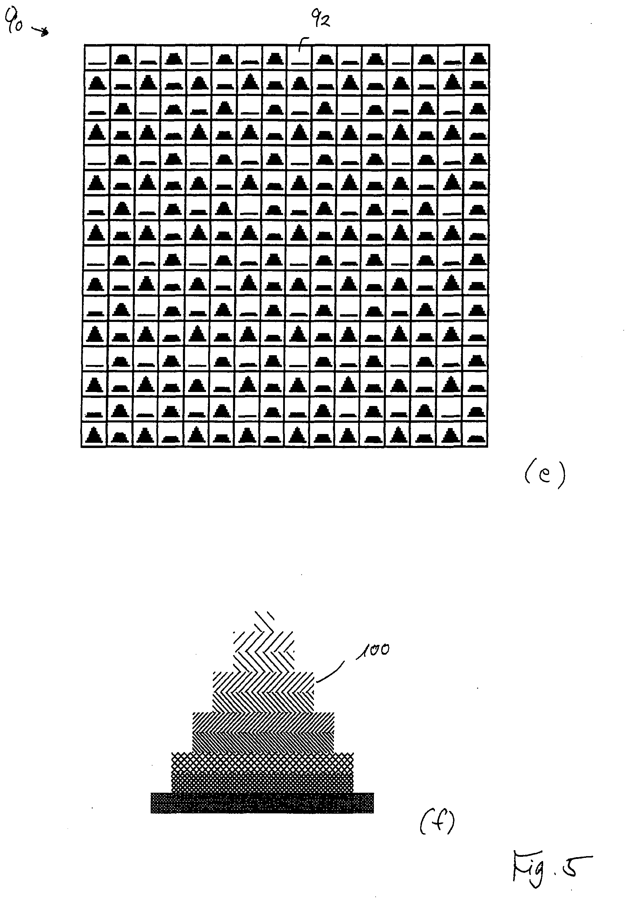

- Fig. 5: zur Illustration eines erfindungsgemäßen Verfahrens zur Herstellung einer Moire-Vergrößerungsanordnung in
(a) ein gewünschtes Moire-vergrößertes Erscheinungsbild in Form eines Halbton-Sollbilds mit n = 256 möglichen Graustufen, in
(b) die codierten Grauwerte des Halbton-Sollbilds von Fig. 5(a) auf einer Skala, die von 0 (Schwarz) bis 255 (Weiß) reicht, in
(c) ein Halbtongrundraster in Form einer Schwellwertmatix mit 16 x 16 Grund-Rasterzellen, in
(d) drei Motiv-Rasterzellen des Motivbilds und die zugeordneten Grund-Rasterzellen des Halbtongrundrasters, in
(e) das Schwellwert-transformierte Motivbild, und in
(f) die Rekonstruktion des Moire-vergrößerten Bilds aus der Vielzahl an Motiv-Rasterzellen.

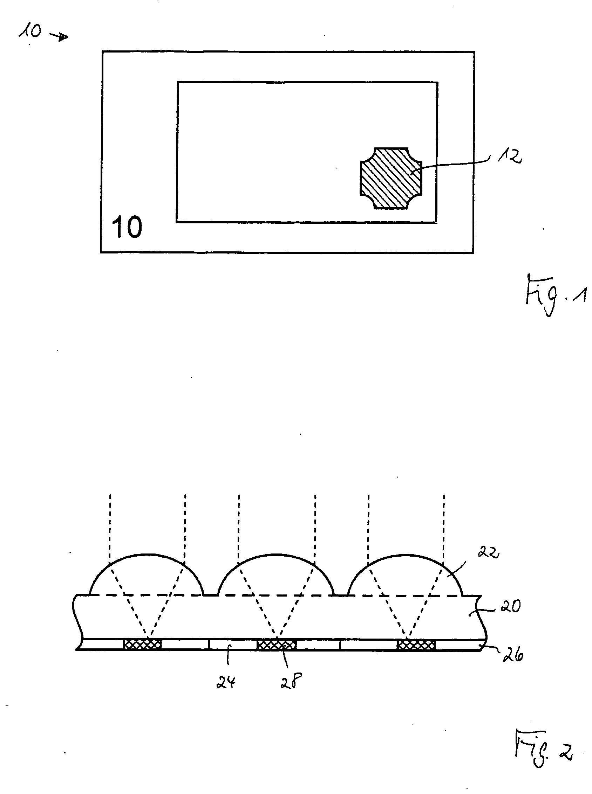

Die Erfindung wird nun am Beispiel von Sicherheitselementen für Banknoten erläutert. Figur 1 zeigt dazu eine schematische Darstellung einer Banknote 10, die mit einem erfindungsgemäßen Sicherheitselement in Form eines aufgeklebten Transferelements 12 versehen ist. Das Transferelement 12 ist mit einer mikrooptischen Darstellungsanordnung versehen, die bei Betrachtung ein Moire-vergrößertes Sollbild mit drei oder mehr Helligkeitsstufen zeigt.

Es versteht sich, dass die Erfindung nicht auf Transferelemente bei Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen auch direkt aufgedruckte Sicherheitselemente, Sicherheitsfäden und Sicherheitsstreifen infrage. Das Sicherheitselement kann auch in Form einer Abdeckfolie ausgebildet sein, die über einem Fensterbereich oder einer durchgehenden Öffnung der Banknote angeordnet ist. Das Sicherheitselement kann für Betrachtung in Aufsicht, Durchsicht oder für Betrachtung sowohl in Aufsicht als auch in Durchsicht ausgelegt sein. Auch beidseitige Gestaltungen kommen in Frage, bei denen beiderseits eines Motivbilds Betrachtungsraster angeordnet sind.

Figur 2 zeigt schematisch den Schichtaufbau eines erfindungsgemäßen Sicherheitselements im Querschnitt, wobei nur die für die Erläuterung des Funktionsprinzips erforderlichen Teile des Schichtaufbaus dargestellt sind. Das Sicherheitselement enthält einen Träger 20 in Form einer transparenten Kunststofffolie, beispielsweise einer etwa 20 µm dicken Polyethylenterephthalat(PET)-Folie. Die Oberseite der Trägerfolie 20 ist mit einer rasterförmigen Anordnung von Mikrolinsen 22 versehen, die auf der Oberfläche der Trägerfolie ein zweidimensionales Bravais-Gitter mit einer vorgewählten Symmetrie bilden. Das Bravais-Gitter kann beispielsweise eine hexagonale Gittersymmetrie aufweisen. Möglich sind jedoch auch andere, insbesondere niedrigere Symmetrien und damit allgemeinere Formen, wie etwa die Symmetrie eines Parallelogramm-Gitters.

Der Abstand benachbarter Mikrolinsen 22 ist vorzugsweise so gering wie möglich gewählt, um eine möglichst hohe Flächendeckung und damit eine kontrastreiche Darstellung zu gewährleisten. Die sphärisch oder asphärisch ausgestalteten Mikrolinsen 22 weisen vorzugsweise einen Durchmesser zwischen 5 µm und 50 µm und insbesondere einen Durchmesser zwischen lediglich 10 µm und 35 µm auf und sind daher mit bloßem Auge nicht zu erkennen. Es versteht sich, dass bei anderen Gestaltungen auch größere oder kleinere Abmessungen infrage kommen. Beispielsweise können die Mikrolinsen bei Modulo-Vergrößerungsanordnungen für Dekorationszwecke einen Durchmesser zwischen 50 µm und 5 mm aufweisen, während bei Modulo-Vergrößerungsanordnungen, die nur mit einer Lupe oder einem Mikroskop entschlüsselbar sein sollen, auch Abmessung unterhalb von 5 µm zum Einsatz kommen können.

Auf der Unterseite der Trägerfolie 20 ist eine Motivschicht 26 angeordnet, die ein in eine Mehrzahl von Motiv-Rasterzellen 24 eingeteiltes Motivbild mit abgebildeten und Schwellwert-transformierten Bereichen 28 des darzustellenden Sollbilds enthält. Die abgebildeten und Schwellwert-transformierten Bereiche 28 werden nachfolgend auch kurz als Mikrobilder bezeichnet. Die Anordnung der Motiv-Rasterzellen 24 bildet ebenfalls ein zweidimensionales Bravais-Gitter mit einer vorgewählten Symmetrie, die auch als Mikrobildraster bezeichnet wird.

Im Fall einer Moire-Vergrößerungsanordnung oder einer mikrooptische Vergrößerungsanordnung vom Moiretyp unterscheidet sich dabei das Bravais-Gitter der Motiv-Rasterzellen 24 in seiner Symmetrie und/oder in der Größe seiner Gitterparameter geringfügig von dem Bravais-Gitter der Mikrolinsen 22, wie in Fig. 2 durch den Versatz der Motiv-Rasterzellen 24 gegenüber den Mikrolinsen 22 angedeutet. Je nach Art und Größe des Versatzes entsteht bei der Betrachtung des Motivbilds ein Moire-vergrößertes Bild der Mikrobilder 28. Die Gitterperiode und der Durchmesser der Motiv-Rasterzellen 24 liegen dabei in derselben Größenordnung wie die der Mikrolinsen 22, also vorzugsweise im Bereich von 5 µm bis 50 µm und insbesondere im Bereich von 10 µm bis 35 µm, so dass auch die Mikrobilder 28 selbst mit bloßem Auge nicht zu erkennen sind. Bei Gestaltungen mit den oben erwähnten größeren oder kleineren Mikrolinsen sind selbstverständlich auch die Motiv-Rasterzellen 24 entsprechend größer oder kleiner ausgebildet.

Die optische Dicke der Trägerfolie 20 und die Brennweite der Mikrolinsen 22 sind so aufeinander abgestimmt, dass sich die Motivschicht 26 etwa im Abstand der Linsenbrennweite befindet. Die Trägerfolie 20 bildet somit eine optische Abstandsschicht, die einen gewünschten, konstanten Abstand der Mikrolinsen 22 und der Motivschicht 26 mit dem Motivbild gewährleistet.

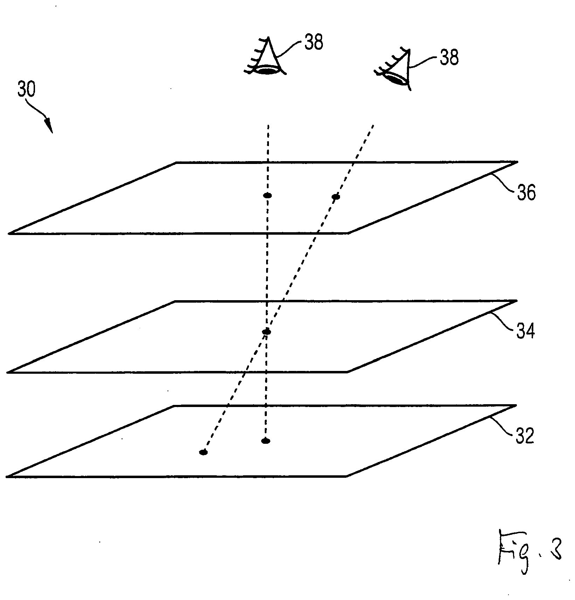

Figur 3 zeigt schematisch eine nicht maßstäblich dargestellte Modulo-Vergrößerungsanordnung 30 mit einer Motivebene 32, in der sich das Motivbild mit seinen in Motiv-Rasterzellen angeordneten Motivbildern 28 befindet, und mit einer Linsenebene 34, in der ein Mikrolinsenraster vorgesehen ist. Die Modulo-Vergrößerungsanordnung 30 erzeugt eine Bildebene 36, in der das vom Betrachter 38 wahrgenommene Halbton-Sollbild erscheint. Für eine genauere Erläuterung des Funktionsprinzips und der Eigenschaften von Moire-Vergrößerungsanordnungen, mikrooptischen Vergrößerungsanordnungen vom Moiretyp und von Modulo-Vergrößerungsanordnungen wird auf die deutschen Patentanmeldungen 10 2005 062 132.5 und 10 2007 029 203.3 sowie auf die internationalen Anmeldungen PCT/EP2006/012374, PCT/EP2008/005173 und PCT/EP2008/005172 verwiesen, deren Offenbarungsgehalte insoweit in die vorliegende Anmeldung aufgenommen werden.

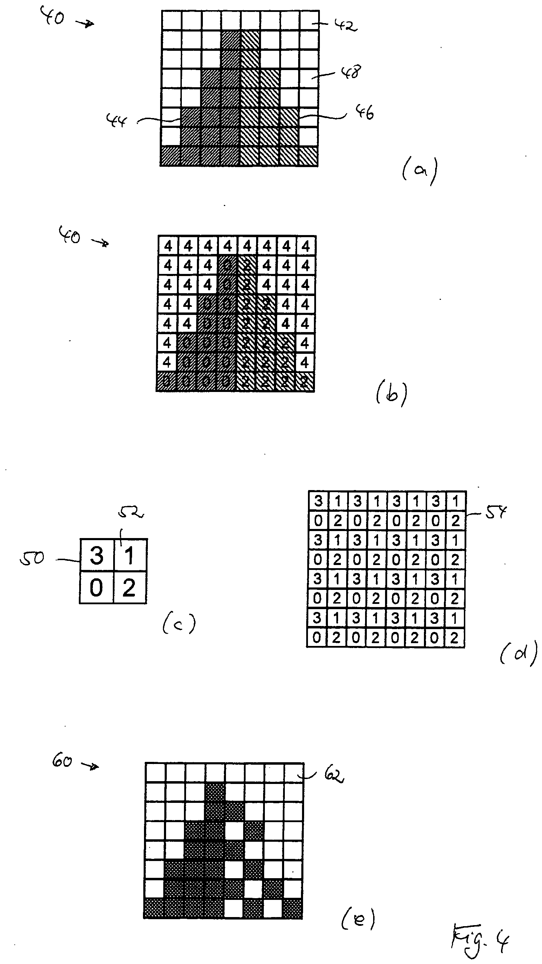

Das grundlegende Verfahren zur Schwellwert-Transformation wird nun mit Bezug auf Fig. 4 erläutert. Dabei wird zur Vereinfachung davon ausgegangen, dass das Betrachtungsraster und das Mikrobildraster identisch sind. Das Beispiel der Fig. 4 kann etwa eine bestimmte Ansicht eines Linsenkippbilds beschreiben.

Figur 4(a) zeigt eine gewünschte Ansicht 40 mit n = 5 möglichen Graustufen. Die Graustufen können dabei beispielsweise als Prozentwerte der maximalen Helligkeit angegeben werden, wobei 100% Helligkeit Weiß entspricht, 75% Helligkeit Hellgrau entspricht, 50% Helligkeit Mittelgrau entspricht, 25% Helligkeit Dunkelgrau entspricht, und 0% Helligkeit Schwarz entspricht. Das gezeigte quadratische Grundraster stellt das Mikrobildraster bzw. das Betrachtungsraster dar, und die Schraffur der einzelnen Zellen 42 zeigt die Graustufe, die aus einem bestimmten Blickwinkel zu sehen sein soll. Die linke Bildhälfte der Ansicht 40 stellt ein schwarzes Dreieck 44 mit einer Helligkeit von 0% dar, die rechte Bildhälfte ein mittelgraues Dreieck 46 mit einer Helligkeit von 50%. Beide Dreiecke 44, 46 sind vor einem weißen Hintergrund 48 einer Helligkeit von 100% angeordnet.

Die Vorgabe der Fig. 4(a) stellt die ideale Ansicht dar, also die Ansicht, die man bei Verwendung von Mikrobildern mit echten Graustufen erhalten würde. Dieser Vorgabe sollen sich die rekonstruierten gerasterten Halbtonbilder unter Verwendung von weniger als n Graustufen erfindungsgemäß möglichst gut annähern.

Vorliegend soll die Ansicht 40 der Fig. 4(a) mit ihren n = 5 Graustufen in einem Motivbild 60 (Fig. 4(e)) mit einer optischen Eigenschaft mit nur k = 2 Ausprägungen dargestellt werden. Die optische Eigenschaft kann beispielsweise in der Anwesenheit oder Abwesenheit einer schwarzen Farbe mit den beiden Ausprägungen "Anwesenheit der schwarzen Farbe" (nachfolgend: Schwarz) und "Abwesenheit der schwarzen Farbe" (nachfolgend: Weiß) bestehen.

Zur Umsetzung der n = 5 Graustufen in die k = 2 Farbausprägungen werden die 5 Graustufen mit den Grauwerten 0 bis 4 codiert, wobei ein Grauwert g einer Helligkeit von 25*g % entspricht. Der Grauwert 0 ist daher einer schwarzen Fläche, der Grauwert 4 einer weißen Fläche zugeordnet und die Grauwerte 1 bis 3 geben die Zwischenstufen an. Diese Codierung ist in Fig. 4(b) zusammen mit den Graustufen der vorgegeben Ansicht 40 gezeigt.

Weiter wird, wie in Fig. 4(c) gezeigt, ein Halbtongrundraster 50 in Form einer Schwellwertmatix mit vier Grund-Rasterzellen 52 vorgegeben, die jeweils einen von vier Halbton-Schwellwerten s = 0, 1, 2 oder 3 enthalten.

Das Halbtongrundraster 50 wird periodisch fortgesetzt, wie in Fig. 4(d) gezeigt, und das fortgesetzte Halbtongrundraster 54 wird den Rasterzellen 42 der Ansicht 40 überlagert. Auf diese Weise wird jeder Rasterzelle 42 eine Grund-Rasterzelle 52 mit einem enthaltenen Halbton-Schwellwert s zugeordnet.

Das Motivbild (Fig. 4(e)) wird ebenfalls in Rasterzellen 62 unterteilt, die den Rasterzellen 42 der Ansicht 40 entsprechen. Eine Rasterzelle 62 des Motivbilds 60 wird nun genau dann mit der Ausprägung "Schwarz" versehen, wenn der Grauwert g der entsprechenden Rasterzelle 42 des Ansicht 40 kleiner oder gleich dem zugeordneten Schwellwert s in der periodisch fortgesetzten Schwellwertmatix 54 der Fig. 4(d) ist. Ist der Grauwert g einer Rasterzelle 42 dagegen größer als der zugeordnete Schwellwert s in der periodisch fortgesetzten Schwellwertmatix 54, so wird die entsprechende Rasterzelle 62 des Motivbilds mit der Ausprägung "Weiß" versehen.

Wie durch einen Vergleich der Grauwerte g der vorgegebenen Ansicht der Fig. 4(b) mit der periodisch fortgesetzten Schwellwertmatix 54 der Fig. 4(d) ersichtlich, ergibt sich auf diese Weise das Schwellwert-transformierte Motivbild 60 der Fig. 4(e), das die n = 5 Graustufen der Ansicht 40 mit Hilfe der nur k = 2 Farbausprägungen "Schwarz" und "Weiß" wiedergibt.

Das beschriebene Verfahren der Schwellwert-Transformation weist insbesondere den Vorteil auf, dass bei rein schwarzen Bereichen (Grauwert 0 bzw. 0%) und rein weißen Bereichen (Grauwert 4 bzw. 100%) keine Qualitätsverluste oder Auflösungsverluste gegenüber dem in Fig. 4(a) gezeigten Idealbild auftreten. Eine Größenbeschränkung der Größe der Schwellwertmatrix, beispielsweise auf eine Größe unterhalb der Auflösungsgrenze des menschlichen Auges (maximal 300 µm Ausdehnung) und damit eine Beschränkung der Anzahl der maximal darstellbaren Graustufen, ist, anders als bei dem oben beschriebenen Verfahren nach dem Stand der Technik daher nicht notwendig. Auch in den grauen Bereichen bleibt die Auflösung hoch, insbesondere treten durch das beschriebene Verfahren deutlich weniger sichtbare Stufen am Rand der Dreiecke 44, 46 auf als bei der Zusammenfassung jeweils mehrere Zellen zu größeren Mikrobildbereichen.

Die Rasterung über Schwellwertmatrizen kann im allgemeinsten Fall unabhängig vom Betrachtungsraster und Mikrobildraster vorgenommen werden.

Wie oben erläutert, wird die Benutzung eines Halbtongrundrasters mit beliebiger Raumfrequenz aber meist zu unerwünschten periodischen Helligkeitsmodulationen führen. Diese lassen sich vermeiden, wenn sich die Schwellwertmatrizen entweder am Betrachtungsraster oder am Mikrobildraster orientieren. Liegt ein festes Mikrobildraster vor, das vom Betrachtungsraster etwas abweicht, so ist eine Rasterung über dieses Mikrobildraster in der Regel vorteilhaft, da dadurch ein "Springen" des Rasters bei bestimmten Blickwinkeln sowie das Auftreten von unerwünschten Moire-Mustern in jedem Fall vermieden werden.

Nachfolgend wird als weiteres Ausführungsbeispiel der Erfindung das Sollbild einer Moire-Vergrößerungsanordnung betrachtet. Figur 5(a) zeigt dazu ein gewünschtes Moire-vergrößertes Erscheinungsbild in Form eines Halbton-Sollbilds 70 mit n = 256 möglichen Graustufen. Das quadratische Grundraster stellt das Mikrobildraster dar, die Schraffur der einzelnen Zellen 72 zeigt die jeweilige Graustufe. Das Halbton-Sollbild 70 mit n = 256 Graustufen soll nun durch ein Motivbild 90 (Fig. 5(e)) mit einer optische Eigenschaft mit nur k = 2 Ausprägungen dargestellt werden, wobei als optische Eigenschaft wie im Ausführungsbeispiel der Fig. 4 die Anwesenheit oder Abwesenheit einer schwarzen Farbe gewählt ist.

Figur 5(b) zeigt die codierten Grauwerte des Halbton-Sollbilds 70 auf einer Skala, die von 0 (Schwarz) bis 255 (Weiß) reicht. Der einfacheren zeichnerischen Darstellung halber ist als Halbton-Sollbild 70 nur ein einfaches Symbol (Pyramide) gezeigt, das nur einen Teil der 256 möglichen Graustufen enthält. In der Praxis lassen sich selbstverständlich auch komplexere Halbton-Sollbilder darstellen, die den gesamten Helligkeitsspielraum ausnutzen, insbesondere Portraitdarstellungen, architektonische, technische oder Naturmotive.

Die Schwellwert-Transformation erfolgt im Ausführungsbeispiel mit Hilfe des in Fig. 5(c) gezeigten Halbtongrundraster 80 in Form einer Schwellwertmatix mit 16 x 16 Grund-Rasterzellen 82, die jeweils einen von 255 Halbton-Schwellwerten s = 0,1,..., 254 enthalten. Die gezeigte Schwellwertmatrix stellt eine modifizierte Bayer-Matrix dar, bei der der bei einer Standard-Bayer-Maxtix auftretende Wert 255 durch den Schwellwert 254 ersetzt ist.

Das Halbtongrundraster 80 wird periodisch fortgesetzt, wie bereits bei Fig. 4(d) illustriert, und das fortgesetzte Halbtongrundraster wird den Rasterzellen 92 des Motivbilds 90 überlagert, so dass jeder Rasterzelle 92 eine Grund-Rasterzelle 82 mit einem enthaltenen Halbton-Schwellwert s zugeordnet wird.

Zur Illustration ist die Zuordnung der ersten drei Rasterzellen 82 der ersten Zeile des Halbtongrundrasters 80 zu entsprechenden Rasterzellen 92 des Motivbilds 90 in Fig. 5(d) dargestellt. Der ersten der drei Rasterzellen 92-1 ist dabei der Schwellwert s₁ = 0 der Rasterzelle 82-1 zugeordnet, der zweiten Rasterzelle 92-2 ist der Schwellwert s₂ = 128 der Rasterzelle 82-2 zugeordnet und der dritten Rasterzelle ist der Schwellwert s₃ = 32 der Rasterzelle 82-3 zugeordnet. Nach 16 Spalten bzw. 16 Zeilen wiederholt sich die Zuordnung aufgrund der periodischen Fortsetzung des Halbtongrundrasters 80.

Im allgemeinen Fall einer Modulo-Vergrößerungsanordnung wird nun für jede Motiv-Rasterzelle 92 ein zugehöriger abgebildeter Bereich des Halbton-Sollbilds 70 mit n Helligkeitsstufen bestimmt. Bei der im Ausführungsbeispiel betrachteten spezielleren Moire-Vergrößerungsanordnung sind die abgebildeten Bereiche alle durch das gleiche, verkleinerte Abbild des vorgegebenen Halbton-Sollbilds 70 der Fig. 5(a) gegeben.

Zur Schwellwert-Transformation werden nun in jeder Motiv-Rasterzelle 92 die Helligkeitsstufen der verkleinerten Abbilder des Halbton-Sollbilds 70 mit dem Halbton-Schwellwert s der zugeordneten Grund-Rasterzelle 82 verglichen. Der abgebildete Bereich wird entsprechend dem Vergleichsergebnis in k = 2 Unterbereiche 94, 96 unterteilt, denen jeweils eine der beiden Ausprägungen der optischen Eigenschaft zugeordnet ist. Im Ausführungsbeispiel ist dem Unterbereich 94 die Ausprägung "Schwarz", dem Unterbereich 96 die Ausprägung "Weiß" zugeordnet. Ist nun die Helligkeitsstufe bzw. der Grauwert eines Pixels im verkleinerten Abbild kleiner oder gleich dem Schwellwert s der zugeordneten Grund-Rasterzelle 82, so wird dieses Pixel dem Unterbereich 94 zugeordnet und Schwarz gefüllt, ist die Helligkeitsstufe bzw. der Grauwert eines Pixels größer als der Schwellwert s, so wird das Pixel dem Unterbereich 96 zugeordnet und nicht bzw. mit Weiß gefüllt.

So ist beispielsweise der linken Rasterzelle 92-1 der Fig. 5(d) der Schwellwert s₁ = 0 zugeordnet, so dass dort nur diejenigen Pixel der Ansicht 70, die einen Grauwert gleich 0 haben, dem Unterbereich 94 zugeordnet und Schwarz gefüllt werden. Wie aus Fig. 5(b) ersichtlich, sind dies gerade die Pixel der Basisfläche der Pyramide. Der mittleren Rasterzelle 92-2 ist der Schwellwert s₂ = 128 zugeordnet, so dass dort diejenigen Pixel mit Grauwert kleiner oder gleich 128 dem Unterbereich 94 zugeordnet und Schwarz gefüllt werden. Wie aus Fig. 5(b) ersichtlich, sind dies gerade die Pixel der unteren sechs Stufen des Pyramidensymbols. Der rechten Rasterzelle 92-3 ist schließlich der Schwellwert s₃ = 32 zugeordnet, so dass dort diejenigen Pixel mit Grauwert kleiner oder gleich 32 dem Unterbereich 94 zugeordnet und Schwarz gefüllt werden. Wie aus Fig. 5(b) ersichtlich, sind dies die Pixel der unteren zwei Stufen des Pyramidensymbols.

Durch Fortsetzung dieses Vergleichs-, Zuordnungs-, und Füllschrittes entsteht das vollständige Motivbild 90, von dem in Fig. 5(e) ein 16 x 16 Rasterzellen großer Ausschnitt gezeigt ist. Das vollständige Motivbild 90 besteht entsprechend aus einer periodischen Aneinanderreihung des in Fig. 5(e) gezeigten Ausschnitts.

Bei der Betrachtung des Motivbilds 90 durch ein entsprechend angepasstes Linsenraster sieht der Betrachter durch die Mikrolinsen stets gleichzeitig eine Vielzahl von Rasterzellen 92 des Motivbilds 90. Wie sich aus der oben geschilderten Konstruktion der Motivbilds 90 ergibt, ist die Häufigkeit mit der ein Bildteil des vorgegeben Sollbilds in den Mikrobildern mit der Ausprägung "Schwarz" (bzw. "Weiß") auftritt, im Wesentlichen umgekehrt proportional (bzw. proportional) zur Helligkeitsstufe diese Bildteils im Sollbild. Beispielsweise erscheint ein Bildteil mit Helligkeitsstufe 256 (Weiß) in keinem der 256 Mikromotivbilder der Fig. 5(e) schwarz, ein Bildteil mit Helligkeitsstufe 128 (Mittelgrau) erscheint gerade in der Hälfte der 256 Mikromotivbilder schwarz und ein Bildteil mit Helligkeitsstufe 0 (Schwarz) erscheint in allen 256 Mikromotivbildern schwarz.

Bei der Rekonstruktion des Moiré-vergrößerten Bilds 100 aus der Vielzahl der Mikrobilder der Motiv-Rasterzellen 92 tragen die Bildteile daher jeweils entsprechend ihrer Helligkeitsstufe zum Gesamteindruck bei und erscheinen für das Auge des Betrachters im Moiré-vergrößerten Bild 100 somit mit dem entsprechenden Grauwert, wie in Fig. 5(f) dargestellt.

Die beschriebenen Ausführungsbeispiele gehen jeweils davon aus, dass die Bildinformation des Halbton-Sollbilds als Graustufenbild mit einer beliebigen Anzahl n von Graustufen vorliegt. In einer bevorzugten Ausführungsvariante liegt die Bildinformation in Form eines Pixelrasters vor, wie etwa in den Figuren 4(a) und 5(a) gezeigt. Allerdings können die Bilder im allgemeinen Fall auch in andere, beliebig geformte Bildbereiche aufgeteilt sein.

Das Halbtongrundraster kann nicht nur an das Mikrobildraster, sondern alternativ auch an das Betrachtungsraster gekoppelt sein.

Die oben beispielhaft verwendeten Bayer-Matrizen als Schwellwertmatrizen verfolgen das Ziel, eine möglichst unauffällige Rasterung zu erzeugen. Zu diesem Zweck kann auch ein Satz von mehreren Schwellwertmatrizen vorgegeben werden, und es kann bei der periodischen Fortsetzung des Grundrasters jeweils zufällig eine der vorgegebenen Schwellwertmatrizen ausgewählt werden. Um Artefakte zu vermeiden, können auch nicht-rechteckige Kacheln zur Parkettierung der Ebene des Motivbilds verwendet werden.

In anderen Ausführungsformen können aus gestalterischen Gründen gezielt solche Schwellwertmatrizen verwendet werden, die eine auffällige Rasterung, beispielsweise ein grobes Punkt- oder Linienraster erzeugen. Beispielsweise kann mit einem groben Punktraster das Druckbild einer Zeitung nachgebildet werden.

Bei den bisher beschriebenen Ausführungsbeispielen wurde stets von einer optischen Eigenschaft mit nur k = 2 Ausprägungen ("Schwarz" und "Weiß") ausgegangen. Die zwei Ausprägungen müssen dabei nicht zwingend durch einen Farbauftrag entstehen, sondern können beispielsweise auch durch Prägen von Erhöhungen oder Vertiefungen, durch Auftragen einer bunten Farbe, durch Auftragen zweier verschiedener Farben, durch eine Metallisierung, durch eine Verspiegelung oder durch ein Dünnschichtsystem mit Interferenzfarben gebildet sein.

Manche optische Eigenschaften lassen sich auch in mehr als zwei Ausprägungen erzeugen. Beispielsweise können zwei unterschiedlich tiefe Vertiefungen erzeugt und mit Farbe gefüllt werden, um eine optische Eigenschaft mit k = 3 Ausprägungen (keine Vertiefung, erste Tiefe, zwei Tiefe) zu bilden. Bei relativ großen Motivzellen können Motivbilder unter Umständen auch bereits mit mehreren Grau- oder Helligkeitsstufen gedruckt werden.

Bei einer optischen Eigenschaft mit k = 3 Ausprägungen lässt sich die Anzahl der erzeugbaren Helligkeitsstufen verdoppeln. Für jede zusätzliche Ausprägung ist dann eine eigene Schwellwertmatrix nötig. Beispielsweise kann eine erste Schwellwertmatrix 1 für eine bestimmte Zelle einen ersten Wert A1 liefern und eine weitere Schwellwertmatrix 2 einen Wert A2<A1. Ist der Grauwert nun kleiner oder gleich A1, werden die erste und zweite Ausprägung (keine Vertiefung und erste Tiefe) verwendet, beispielsweise eine Prägestruktur mit einer ersten Tiefe geprägt. Ist der Grauwert sogar kleiner oder gleich A2, werden die erste und dritte Ausprägung (keine Vertiefung und zweite Tiefe) verwendet, beispielsweise wird mit einer größeren Tiefe geprägt. Derartige Verfahren können insbesondere bei sehr großen Linsen sinnvoll sein und sind daher eher im Karten- als im Banknotenbereich vorteilhaft einsetzbar.

Kombiniert man Mikromotivbilder unterschiedlicher Farbe, lässt sich das hier vorgestellte Verfahren auch auf mehrere Farben anwenden. In bevorzugten Ausführungsvarianten werden dabei für verschiedene Farben auch unterschiedliche Halbtonraster bzw. Schwellwertmatrizen benutzt. Kombiniert man gerasterte Mikrostrukturen der Farben Rot, Grün und Blau oder der Farben Cyan, Magenta, Gelb und ggf. zusätzlich Schwarz, so lassen sich Vollfarbbilder in Durchsicht oder Aufsicht realisieren.

Die bisher beschriebenen Gestaltungen gehen von in zwei Richtungen fokussierenden Betrachtungselementen, wie etwa sphärischen oder asphärischen Linsen oder Mikrohohlspiegeln aus. Dadurch lässt sich das Fokussierelement- bzw. Mikrobildraster mit einer zweidimensionalen Schwellwertmatrix verbinden. Im Fall eindimensional fokussierender Fokussierelemente, wie etwa Zylinderlinsen oder entsprechenden Mikrohohlspiegeln bestehen insbesondere die folgenden beiden Möglichkeiten der Halbtonrasterung:
Bei der ersten Möglichkeit wird zur Zuordnung zu den Schwellwertmatrizen ein beliebiges zweidimensionales Raster benutzt, dessen Rasterweite in einer Richtung der des eindimensionalen Fokussierelementrasters oder Motivrasters entspricht. Bei der zweiten Möglichkeit wird die Halbtonrasterung weitgehend unabhängig vom Fokussierelementraster durchgeführt. Dies ist hier möglich, da sich mit Zylinderlinsen die Gefahr einer unerwünschten Moire-Bildung von Motivbildraster und Betrachtungselementraster leicht umgehen lässt. Die Motivbildrasterung kann beispielsweise mit einem Linienraster durchgeführt werden, dessen Linien senkrecht auf der Orientierung der Zylinderlinsen steht. Auf diese Weise ist sichergestellt, dass sich kein sichtbares Moire dieser beiden Raster ergibt.

### Bezugszeichenliste

- 10: Banknote
- 12: Transferelement
- 20: Trägerfolie
- 22: Mikrolinsen
- 24: Motiv-Rasterzellen
- 26: Motivschicht
- 28: Mikrobilder
- 30: Modulo-Vergrößerungsanordnung
- 32: Motivebene
- 34: Linsenebene
- 36: Bildebene
- 38: Betrachter
- 40: vorgegebene Ansicht
- 42: Rasterzellen
- 44, 46: Dreiecke
- 48: Hintergrund
- 50: Halbtongrundraster
- 52: Grund-Rasterzellen
- 54: fortgesetztes Halbtongrundraster
- 60: Motivbild
- 62: Rasterzelle
- 70: Halbton-Sollbild
- 72: Zellen
- 80: Halbtongrundraster
- 82,82-1, 82-2, 82-3: Grund-Rasterzellen
- 90: Motivbilds
- 92, 92-1, 92-2, 92-3: Motiv-Rasterzellen
- 94, 96: Unterbereiche
- 100: Moire-vergrößertes Bild

## Patentansprüche

1. Verfahren zur Herstellung einer mikrooptischen Darstellungsanordnung (30) zur Darstellung eines Halbton-Sollbilds (70) mit n > 2 Helligkeitsstufen, bei dem:
a) ein Motivbild (90) erzeugt wird, das in eine Mehrzahl von periodisch oder zumindest lokal periodisch angeordneten Motiv-Rasterzellen (92,92-1,92-2,92-3) eingeteilt wird, in denen jeweils abgebildete und Schwellwert-transformierte Bereiche des Halbton-Sollbilds (70) angeordnet werden,
wobei die abgebildeten und Schwellwert-transformierten Bereiche des Halbton-Sollbilds (70) mit Unterbereichen (94,96) ausgebildet werden, die eine von k Ausprägungen einer vorgegebenen optischen Eigenschaft enthalten, wobei 1 < k < n gilt,
b) ein Betrachtungsraster aus einer Mehrzahl von Betrachtungsrasterelementen (22) erzeugt wird, das bei Betrachtung des Motivbilds (90) das Halbton-Sollbild (70) mit n Helligkeitsstufen aus den in den Zellen angeordneten abgebildeten und Schwellwert-transformierten Bereichen rekonstruiert,
wobei zur Erzeugung des Motivbilds (90)
a1) zumindest ein Halbtongrundraster (80) mit Grund-Rasterzellen (82,82-1,82-2,82-3) vorgegeben wird, die jeweils einen von zumindest zwei Halbton-Schwellwerten enthalten,
a2) eine gewünschte optische Eigenschaft mit k Ausprägungen vorgegeben wird, mit 1 < k < n,
a3) das zumindest eine Halbtongrundraster (80) periodisch den Rasterzellen des Motivbilds überlagert wird, so dass jeder Grund-Rasterzelle (82,82-1,82-2,82-3) jedes Halbtongrundrasters (80) zumindest eine von der Grund-Rasterzelle überlagerte Motiv-Rasterzelle (92,92-1,92-2,92-3) zugeordnet wird,
a4) für jede Motiv-Rasterzelle (92,92-1,92-2,92-3) ein zugehöriger abgebildeter Bereich des Halbton-Sollbilds (70) mit n Helligkeitsstufen bestimmt wird, und
a5) für die Schwellwert-Transformation jeweils die Helligkeitsstufen der abgebildeten Bereiche der überlagerten Motiv-Rasterzellen mit dem Halbton-Schwellwert der Grund-Rasterzelle verglichen werden, die abgebildete Bereiche der überlagerten Motiv-Rasterzellen entsprechend dem Vergleichsergebnis in Unterbereiche (94,96) unterteilt werden, denen jeweils eine der k Ausprägungen der optischen Eigenschaft zugeordnet wird, und jeder der Unterbereiche mit der zugeordneten Ausprägung der optischen Eigenschaft versehen wird.

2. Verfahren nach Anspruch 1, **dadurch gekennzeichnet, dass** die vorgegebene optische Eigenschaft ausgewählt wird aus der Gruppe, gebildet durch
i) Anwesenheit oder Abwesenheit einer schwarzen, grauen oder weißen Farbe,
ii) unterschiedliche Deckung einer schwarzen, grauen oder weißen Farbe,
iii) Anwesenheit oder Abwesenheit einer oder mehrerer bunter Farben,
iv) unterschiedliche Deckung einer oder mehrerer bunter Farben,
v) eine Erhöhung oder Vertiefung,
vi) ein diffraktives Gitter oder eine Mattstruktur,
vii) Subwellenlängenstrukturen, wie etwa Subwellenlängengitter oder Motenaugenstrukturen,
viii) eine zumindest teilweise Metallisierung oder Verspiegelung,
ix) ein Dünnfilmsystem, insbesondere ein Dünnfilmsystem, das Interferenzfarben zeigt,
x) opake bzw. nicht opake Bereiche,
xi) Bereiche unterschiedlicher optischer Transmission,
oder dass die vorgegebene optische Eigenschaft aus einer Kombination mehrerer der Elemente i) bis xi) gebildet wird.

3. Verfahren nach Anspruch 1 oder 2, **dadurch gekennzeichnet, dass** eine vorgegebene optische Eigenschaft mit genau zwei unterschiedliche Ausprägungen gewählt wird, in Schritt a1) genau ein Halbtongrundraster mit Grund-Rasterzellen vorgegeben wird und die abgebildeten Bereiche in Schritt a5) in genau zwei Unterbereiche unterteilt werden, denen jeweils eine der zwei Ausprägungen der optischen Eigenschaft zugeordnet werden.

4. Verfahren nach Anspruch 3, **dadurch gekennzeichnet, dass** für die Schwellwert-Transformation jeweils die Helligkeitsstufen der abgebildeten Bereiche der überlagerten Motiv-Rasterzellen mit dem Halbton-Schwellwert der Grund-Rasterzelle verglichen werden und die abgebildeten Bereiche der überlagerten Motiv-Rasterzellen dadurch in zwei Unterbereiche unterteilt werden, dass die Helligkeitsstufen, die kleiner oder gleich dem Halbton-Schwellwert sind, einem ersten Unterbereich zugeordnet werden und die Helligkeitsstufen, die größer als der Halbton-Schwellwert sind, einem zweiten Unterbereich zugeordnet werden.

5. Verfahren nach Anspruch 1 oder 2, **dadurch gekennzeichnet, dass** als vorgegebene optische Eigenschaft die Anwesenheit oder Abwesenheit oder die unterschiedliche Deckung der Farben Rot, Grün und Blau oder der Farben Cyan, Magenta und Gelb oder der Farben Cyan, Magenta, Gelb und Schwarz gewählt wird.

6. Verfahren nach wenigstens einem der Ansprüche 1 bis 5, **dadurch gekennzeichnet, dass** die Betrachtungsrasterelemente als sphärische Linsen, asphärische Linsen, Zylinderlinsen oder ein- oder zweidimensional fokussierende Mikrohohlspiegel ausgeführt werden.

7. Verfahren nach wenigstens einem der Ansprüche 1 bis 6, **dadurch gekennzeichnet, dass** das Betrachtungsraster und das Raster der Motiv-Rasterzellen des Motivbilds so aufeinander abgestimmt werden, dass sich bei der Betrachtung ein Moire-Vergrößerungseffekt ergibt.

8. Verfahren nach wenigstens einem der Ansprüche 1 bis 7, **dadurch gekennzeichnet, dass** die Rasterweite des Betrachtungsrasters zwischen 5 µm und 500 µm, bevorzugt zwischen etwa 10 µm und 100 µm, besonders bevorzugt zwischen etwa 20 µm und 50 µm gewählt wird.

9. Verfahren nach wenigstens einem der Ansprüche 1 bis 8, **dadurch gekennzeichnet, dass** Betrachtungsrasterelemente mit einer Brennweite gewählt werden, die nicht größer als 500 µm, bevorzugt nicht größer als etwa 100 µm und besonders bevorzugt nicht größer als 50 µm ist.

10. Verfahren nach wenigstens einem der Ansprüche 1 bis 9, **dadurch gekennzeichnet, dass** das Betrachtungsraster das Halbton-Sollbild mit mindestens 3, bevorzugt mit mindestens n=10, besonders bevorzugt mit mindestens 100 Helligkeitsstufen und ganz besonders bevorzugt mit mindestens 200 Helligkeitsstufen rekonstruiert.

11. Verfahren nach wenigstens einem der Ansprüche 1 bis 10, **dadurch gekennzeichnet, dass** das Betrachtungsraster das Halbton-Sollbild mit n Grau-Helligkeitsstufen rekonstruiert oder mit n Farb-Helligkeitsstufen für vorgegebene Grundfarben rekonstruiert.

12. Verfahren nach wenigstens einem der Ansprüche 1 bis 11, **dadurch gekennzeichnet, dass** als Halbtongrundraster eine Schwellwertmatrix mit einer Größe von mindestens 2x2, vorzugsweise von mindestens 4x4 und besonders bevorzugt von mindestens 10x10 gewählt wird.

13. Verfahren nach wenigstens einem der Ansprüche 1 bis 12, **dadurch gekennzeichnet, dass** für die Schritte a1) bis a5) ein Halbtongrundraster gewählt wird, das mit dem Motivraster oder mit dem Betrachtungsraster zusammenfällt.

14. Verfahren zur Herstellung einer mikrooptischen Darstellungsanordnung (30) zur Darstellung eines Halbton-Sollbilds (70) mit n > 2 Helligkeitsstufen, bei dem:
a) ein Motivbild (90) erzeugt wird, das in eine Mehrzahl von periodisch oder zumindest lokal periodisch angeordneten Motiv-Rasterzellen (92,92-1,92-2,92-3) eingeteilt wird, in denen jeweils abgebildete und Schwellwert-transformierte Bereiche des Halbton-Sollbilds (70) angeordnet werden,
wobei die abgebildeten und Schwellwert-transformierten Bereiche des Halbton-Sollbilds (70) mit Unterbereichen (94,96) ausgebildet werden, die eine von k Ausprägungen einer vorgegebenen optischen Eigenschaft enthalten, wobei 1 < k < n gilt,
b) ein Betrachtungsraster aus einer Mehrzahl von Betrachtungsrasterelementen (22) erzeugt wird, das bei Betrachtung des Motivbilds (90) das Halbton-Sollbild (70) mit n Helligkeitsstufen aus den in den Zellen angeordneten abgebildeten und Schwellwert-transformierten Bereichen rekonstruiert,
wobei zur Erzeugung des Motivbilds (90)
a1) zumindest ein Halbtongrundraster (80) mit Grund-Rasterzellen (82,82-1,82-2,82-3) vorgegeben wird, die jeweils einen von zumindest zwei Halbton-Schwellwerten enthalten,
a2) eine gewünschte optische Eigenschaft mit k Ausprägungen vorgegeben wird, mit 1 < k < n,
a3) das zumindest eine Halbtongrundraster (80) periodisch den Rasterzellen des Motivbilds überlagert wird, so dass jeder Motiv-Rasterzelle (92,92-1,92-2,92-3) eine Grund-Rasterzelle (82,82-1,82-2,82-3) zumindest eines Halbtongrundrasters (80) zugeordnet wird,
a4) für jede Motiv-Rasterzelle (92,92-1,92-2,92-3) ein zugehöriger abgebildeter Bereich des Halbton-Sollbilds (70) mit n Helligkeitsstufen bestimmt wird, und
a5) für die Schwellwert-Transformation die Helligkeitsstufen des abgebildeten Bereichs mit dem Halbton-Schwellwert der zugeordneten Grund-Rasterzelle des zumindest einen Halbtongrundrasters verglichen werden, der abgebildete Bereich entsprechend dem Vergleichsergebnis in Unterbereiche (94,96) unterteilt wird, denen jeweils eine der k Ausprägungen der optischen Eigenschaft zugeordnet wird, und jeder der Unterbereiche mit der zugeordneten Ausprägung der optischen Eigenschaft versehen wird.

15. Mikrooptische Darstellungsanordnung (30) für Sicherheitspapiere, Wertdokumente und andere Datenträger, herstellbar nach einem der Ansprüche 1 bis 14, mit einer Rasterbildanordnung zur Darstellung eines Halbton-Sollbilds (70) mit n > 2 Helligkeitsstufen, mit:
- einem Motivbild (90), das in eine Mehrzahl von periodisch oder zumindest lokal periodisch angeordneten Motiv-Rasterzellen (92,92-1,92-2,92-3) eingeteilt ist, in denen jeweils abgebildete und Schwellwert-transformierte Bereiche des Halbton-Sollbilds (70) angeordnet sind,
- einem Betrachtungsraster aus einer Mehrzahl von Betrachtungsrasterelementen (22), das bei Betrachtung des Motivbilds (90) das Halbton-Sollbild (70) mit n Helligkeitsstufen aus den in den Zellen angeordneten abgebildeten und Schwellwert-transformierten Bereichen rekonstruiert,
- wobei die abgebildeten und Schwellwert-transformierten Bereiche des Halbton-Sollbilds (70) mit Unterbereichen (94,96) ausgebildet sind, die eine von k Ausprägungen einer vorgegebenen optischen Eigenschaft enthalten, wobei 1 < k < n gilt, und wobei durch die Schwellwert-Transformation die Häufigkeit des Auftretens eines Bildteils des Halbton-Sollbilds (70) in den Motiv-Rasterzellen (92,92-1,92-2,92-3) durch die Helligkeitsstufe diese Bildteils im Halbton-Sollbild bestimmt ist.

16. Datenträger (10), insbesondere Wert- oder Sicherheitselement mit einer nach einem der Ansprüche 1 bis 14 hergestellten mikrooptischen Darstellungsanordnung (30) oder einer mikrooptischen Darstellungsanordnung (90) nach Anspruch 15.

## Claims

1. A method for manufacturing a micro-optical depiction arrangement (30) for depicting a halftone target image (70) having n > 2 brightness levels, in which:
a) a motif image (90) is produced that is subdivided into a plurality of periodically or at least locally periodically arranged motif grid cells (92,92-1,92-2,92-3), in which, in each case, depicted and threshold-transformed regions of the halftone target image (70) are arranged,
the depicted and threshold-transformed regions of the halftone target image (70) being developed having sub-regions (94,96) that include one of k expressions of a specified optical property, where 1 < k < n,
b) a viewing grid composed of a plurality of viewing grid elements (22) is produced that, when the motif image (90) is viewed, reconstructs the halftone target image (70) having n brightness levels from the depicted and threshold-transformed regions arranged in the cells,
wherein, to produce the motif image (90)
a1) at least one halftone base grid (80) having base grid cells (82,82-1,82-2,82-3) is specified, each of which includes one of at least two halftone thresholds,
a2) a desired optical property having k expressions is specified, where 1 < k < n,
a3) the at least one halftone base grid (80) is periodically overlaid on the grid cells of the motif image such that at least one motif grid cell (92,92-1,92-2,92-3) overlaid by the base grid cell is assigned to each base grid cell (82,82-1,82-2,82-3) of each halftone base grid (80),
a4) for each motif grid cell (92,92-1,92-2,92-3), an associated depicted region of the halftone target image (70) having n brightness levels is determined, and
a5) for the threshold transformation, in each case, the brightness levels of the depicted regions of the overlaid motif grid cells are compared with the halftone threshold of the base grid cell, the depicted regions of the overlaid motif grid cells are grouped according to the comparison result into sub-regions (94,96), to each of which one of the k expressions of the optical property is assigned, and each of the sub-regions is furnished with the assigned expression of the optical property.

2. The method according to claim 1, **characterized in that** the specified optical property is selected from the group formed by
i) presence or absence of a black, gray or white color,
ii) different coverage of a black, gray or white color,
iii) presence or absence of one or more chromatic colors,
iv) different coverage of one or more chromatic colors,
v) an elevation or depression,
vi) a diffractive grating or a matte pattern,
vii) subwavelength patterns, such as subwavelength gratings or moth-eye patterns,
viii) an at least partial metalization or reflective coating,
ix) a thin-film system, especially a thin-film system that displays interference colors,
x) opaque or non-opaque regions,
xi) regions of different optical transmittance,
or **in that** the specified optical property is formed from a combination of multiple of the elements i) to xi).

3. The method according to claim 1 or 2, **characterized in that** a specified optical property having exactly two different expressions is chosen, in step a1), exactly one halftone base grid having base grid cells is specified and the depicted regions in step a5) are grouped into exactly two sub-regions, to each of which one of the two expressions of the optical property are assigned.

4. The method according to claim 3, **characterized in that,** for the threshold transformation, in each case, the brightness levels of the depicted regions of the overlaid motif grid cells are compared with the halftone threshold of the base grid cell, and the depicted regions of the overlaid motif grid cells are grouped into two sub-regions by assigning the brightness levels that are less than or equal to the halftone threshold to a first sub-region, and assigning the brightness levels that are greater than the halftone threshold to a second sub-region.

5. The method according to claim 1 or 2, **characterized in that** the presence or absence or the different coverage of the colors red, green and blue or of the colors cyan, magenta and yellow or of the colors cyan, magenta, yellow and black is chosen as the specified optical property.

6. The method according to at least one of claims 1 to 5, **characterized in that** the viewing grid elements are executed as spherical lenses, aspherical lenses, cylindrical lenses or one- or two-dimensional focusing concave microreflectors.

7. The method according to at least one of claims 1 to 6, **characterized in that** the viewing grid and the grid of the motif grid cells of the motif image are coordinated with each other in such a way that a moire magnification effect results when viewed.

8. The method according to at least one of claims 1 to 7, **characterized in that** the line screen of the viewing grid is chosen to be between 5 µm and 500 µm, preferably between about 10 µm and 100 µm, particularly preferably between about 20 µm and 50 µm.

9. The method according to at least one of claims 1 to 8, **characterized in that** viewing grid elements having a focal length that is not greater than 500 µm, preferably not greater than about 100 µm and particularly preferably not greater than 50 µm are chosen.

10. The method according to at least one of claims 1 to 9, **characterized in that** the viewing grid reconstructs the halftone target image having at least 3, preferably having at least n=10, particularly preferably having at least 100 brightness levels and most particularly preferably having at least 200 brightness levels.

11. The method according to at least one of claims 1 to 10, **characterized in that** the viewing grid reconstructs the halftone target image having n gray brightness levels or reconstructs it having n color brightness levels for specified primary colors.

12. The method according to at least one of claims 1 to 11, **characterized in that** a threshold matrix having a size of at least 2x2, preferably of at least 4x4 and particularly preferably of at least 10x10 is chosen as the halftone base grid.

13. The method according to at least one of claims 1 to 12, **characterized in that** for the steps a1) to a5), a halftone base grid is chosen that coincides with the motif grid or with the viewing grid.

14. A method for manufacturing a micro-optical depiction arrangement (30) for depicting a halftone target image (70) having n > 2 brightness levels, in which:
a) a motif image (90) is produced that is subdivided into a plurality of periodically or at least locally periodically arranged motif grid cells (92,92-1,92-2,92-3), in which, in each case, depicted and threshold-transformed regions of the halftone target image (70) are arranged,
the depicted and threshold-transformed regions of the halftone target image (70) being developed having sub-regions (94,96) that include one of k expressions of a specified optical property, where 1 < k < n,
b) a viewing grid composed of a plurality of viewing grid elements (22) is produced that, when the motif image (90) is viewed, reconstructs the halftone target image (70) having n brightness levels from the depicted and threshold-transformed regions arranged in the cells,
wherein, to produce the motif image (90)
a1) at least one halftone base grid (80) having base grid cells (82,82-1,82-2,82-3) is specified, each of which includes one of at least two halftone thresholds,
a2) a desired optical property having k expressions is specified, where 1 < k < n,
a3) the at least one halftone base grid (80) is periodically overlaid on the grid cells of the motif image such that one base grid cell (82,82-1,82-2,82-3) of at least one halftone base grid (80) is assigned to each motif grid cell (92,92-1,92-2,92-3),
a4) for each motif grid cell (92,92-1,92-2,92-3), an associated depicted region of the halftone target image (70) having n brightness levels is determined, and
a5) for the threshold transformation, the brightness levels of the depicted region are compared with the halftone threshold of the assigned base grid cell of the at least one halftone base grid, the depicted region is grouped according to the comparison result into sub-regions (94,96), to each of which is assigned one of the k expressions of the optical property, and each of the sub-regions is furnished with the assigned expression of the optical property.

15. A micro-optical depiction arrangement (30) for security papers, value documents and other data carriers, manufacturable according to one of claims 1 to 14, having a grid image arrangement for depicting a halftone target image (70) having n > 2 brightness levels, having:
- a motif image (90) that is subdivided into a plurality of periodically or at least locally periodically arranged motif grid cells (92,92-1,92-2,92-3) in which, in each case, depicted and threshold-transformed regions of the halftone target image (70) are arranged,
- a viewing grid composed of a plurality of viewing grid elements (22) that, when the motif image (90) is viewed, reconstructs the halftone target image (70) having n brightness levels from the depicted and threshold-transformed regions arranged in the cells,
- the depicted and threshold-transformed regions of the halftone target image (70) being adapted having sub-regions (94,96) that include one of k expressions of a specified optical property, where 1 < k < n, and due to the threshold transformation, the frequency of the occurrence of an image portion of the halftone target image (70) in the motif grid cells (92,92-1,92-2,92-3) being determined by the brightness level of said image portion in the halftone target image.

16. A data carrier (10), especially a value or security element having, manufactured according to one of claims 1 to 14, a micro-optical depiction arrangement (30) or a micro-optical depiction arrangement (90) according to claim 15.

## Revendications

1. Procédé de fabrication d'un agencement de représentation micro-optique (30) pour la représentation d'une image théorique en demi-teintes (70) comportant n > 2 niveaux de luminosité, dans lequel :
a) une image de motif (90) est générée qui est divisée en une pluralité de cellules de trame de motif (92,92-1,92-2,92-3) dans lesquelles des zones respectivement représentées et transformées en valeurs seuils de l'image théorique en demi-teintes (70) sont représentées,
les zones représentées et transformées en valeurs seuils de l'image théorique en demi-teintes (70) étant réalisées avec des sous-zones (94,96) qui contiennent une de k expressions d'une propriété optique prédéfinie, sachant que 1 < k < n,
b) une trame d'observation est générée à partir d'une pluralité d'éléments de trame d'observation (22) laquelle trame, en cas d'observation de l'image de motif (90), reconstruit l'image théorique en demi-teintes (70) avec n niveaux de luminosité à partir des zones représentées et transformées en valeurs seuils dans les cellules,
dans lequel, pour générer l'image de motif (90),
a1) au moins une trame de base de demi-teintes (80) est prédéfinie qui est dotée de cellules de trame de base (82,82-1,82-2,82-3) qui contiennent respectivement deux valeurs de seuils de demi-teintes,
a2) une propriété optique souhaitée dotée de k expressions est prédéfinie, sachant que 1 < k < n,
a3) au moins une trame de base de demi-teintes (80) est superposée périodiquement aux cellules de trame de de l'image de motif, de sorte qu'à chaque cellule de trame de base (82,82-1,82-2,82-3) de chaque trame de base de demi-teintes (80) au moins une cellule de trame de motif (92,92-1,92-2,92-3) superposée par la cellule de trame de base est associée,
a4) pour chaque cellule de trame de motif (92,92-1,92-2,92-3), une zone représentée correspondante de l'image théorique en demi-teintes (70) est définie avec n niveaux de luminosité, et
a5) pour la transformation de valeurs seuils, les niveaux de luminosité des zones représentées des cellules de trame de motif superposées sont comparés à la valeur seuil de demi-teintes de la cellule de trame de base, les zones représentées des cellules de trame de motif superposées sont divisées en fonction du résultat de la comparaison en des sous-zones (94,96) auxquelles respectivement une des expressions k des propriétés optiques est associée, et chacune des sous-zones est pourvue de l'expression associée de la propriété optique.

2. Procédé selon la revendication 1, **caractérisé en ce que** la propriété optique prédéfinie est sélectionnée dans le groupe constitué par
i) la présence ou l'absence d'une couleur noire, grise ou blanche,
ii) la couverture différente d'une couleur noire, grise ou blanche,
iii) la présence ou l'absence d'une ou plusieurs couleurs vives,
iv) la couverture différente d'une ou plusieurs couleurs vives,
v) une proéminence ou un creux,
vi) une grille diffractive ou une structure mate,
vii) des structures de longueur de sous-ondes, comme par exemple des grilles de longueur de sous-ondes ou des structures en yeux de papillon,
viii) une métallisation ou un miroitement du moins partiel,
ix) un système de film mince, en particulier un système de film mince qui montre des couleurs d'interférences,
x) des zones opaques ou non opaques,
xi) des zones de transmission optique différente, ou que la propriété optique prédéfinie est constituée à partir d'une combinaison de plusieurs des éléments i) à xi).

3. Procédé selon la revendication 1 ou 2, **caractérisé en ce qu'**une propriété optique prédéfinie ayant précisément deux expressions différentes est sélectionnée, que, dans l'étape a1), précisément une trame de base de demi-teintes dotée de cellules de trame de base est prédéfinie et que les zones représentées sont divisées dans l'étape a5) en précisément deux sous-zones auxquelles respectivement une des deux expressions de la propriété optique est associée.

4. Procédé selon la revendication 3, **caractérisé en ce que**, pour la transformation de valeurs seuils, respectivement les niveaux de luminosité des zones représentées des cellules de trame de motif superposées sont comparés à la valeur seuil de demi-teintes de la cellule de trame de base et les zones représentées des cellules de trame de motif superposées sont ainsi divisées en deux sous-zones, que les niveaux de luminosité qui sont inférieurs ou égaux à la valeur seuil de demi-teintes sont associés à une première sous-zone et que les niveaux de luminosité qui sont supérieurs à la valeur seuil de demi-teintes sont associées à une seconde sous-zone.

5. Procédé selon la revendication 1 ou 2, **caractérisé en ce qu'**est sélectionnée comme propriété optique prédéfinie la présence ou l'absence ou la couverture différente des couleurs rouge, vert et bleu ou des couleurs cyan, magenta et jaune ou des couleurs cyan, magenta, jaune et noir.

6. Procédé selon une des revendications 1 à 5, **caractérisé en ce que** les éléments de trame d'observation sont réalisés sous forme de lentilles sphériques, de lentilles asphériques, de lentilles cylindriques ou d'un micro miroir creux focalisant en une ou deux dimensions.

7. Procédé selon une des revendications 1 à 6, **caractérisé en ce que** la trame d'observation et la trame des cellules de trame de motif de l'image de motif sont harmonisées l'une avec l'autre de manière à ce qu'un effet d'agrandissement moiré soit obtenu à l'observation.

8. Procédé selon une des revendications 1 à 7, **caractérisé en ce que** le lignage de trame de la trame d'observation est sélectionné entre 5 µm et 500 µm, de préférence entre environ 10 µm et 100 µm, très préférentiellement entre environ 20 µm et 50 µm.

9. Procédé selon une des revendications 1 à 8, **caractérisé en ce que** sont sélectionnés des éléments de trame d'observation d'une longueur focale qui n'est pas supérieure à 500 µm, de préférence pas supérieure à environ 100 µm et très préférentiellement pas supérieure à 50 µm.

10. Procédé selon une des revendications 1 à 9, **caractérisé en ce que** la trame d'observation reconstruit l'image théorique en demi-teintes avec au moins 3, de préférence avec au moins n = 10, très préférentiellement avec moins de 100 niveaux de luminosité et le plus préférentiellement avec au moins 200 niveaux de luminosité.

11. Procédé selon une des revendications 1 à 10, **caractérisé en ce que** la trame d'observation reconstruit l'image théorique en demi-teintes avec n niveaux de luminosité de gris ou la reconstruit avec n niveaux de luminosité de couleur pour des couleurs de base prédéfinies.

12. Procédé selon une des revendications 1 à 11, **caractérisé en ce qu'**est sélectionnée comme trame de base de demi-teintes une matrice de valeurs seuils d'une taille d'au moins 2 × 2, de préférence d'au moins 4 × 4 et très préférentiellement d'au moins 10 × 10.

13. Procédé selon une des revendications 1 à 12, **caractérisé en ce qu'**est sélectionnée pour les étapes a1) à a5) une trame de base de demi-teintes qui coïncide avec la trame de motif ou avec la trame d'observation.

14. Procédé de fabrication d'un agencement de représentation micro-optique (30) pour la représentation d'une image de base en demi-teintes (70) comportant n > 2 niveaux de luminosité, dans lequel :
a) une image de motif (90) est générée qui est divisée en une pluralité de cellules de trame de motif disposées périodiquement ou du moins localement périodiquement (92,92-1,92-2,92-3) dans lesquelles des zones respectivement représentées et transformées en valeurs seuils de l'image théorique en demi-teintes (70) sont disposées,
les zones respectivement représentées et transformées en valeurs seuils de l'image théorique en demi-teintes (70) sont réalisées avec des sous-zones (94,96) qui contiennent une de k expressions d'une propriété optique prédéfinie, sachant que 1 < k < n,
b) une trame d'observation est générée à partir d'une pluralité d'éléments de trame d'observation (22), laquelle trame d'observation, en cas d'observation de l'image de motif (90), reconstruit l'image théorique en demi-teintes (70) dotée de n niveaux de luminosité à partir des zones représentées et transformées en valeurs seuils disposées dans les cellules,
dans lequel, pour générer l'image de motif (90),
a1) au moins une trame de base de demi-teintes (80) est prédéfinie qui est dotée de cellules de trame de base (82,82-1,82-2,82-3) qui contiennent respectivement une d'au moins deux valeurs seuils de demi-teintes,
a2) une propriété optique souhaitée dotée de k expressions est prédéfinie, sachant que 1 < k < n,
a3) l'au moins une trame de base de demi-teintes (80) est superposée périodiquement aux cellules de trame de l'image de motif, de sorte qu'à chaque cellule de trame de motif (92,92-1,92-2,92-3) est associée une cellule de trame de base (82,82-1,82-2,82-3) d'au moins une trame de base de demi-teintes (80),
a4) pour chaque cellule de trame de motif (92,92-1,92-2,92-3), une zone représentée correspondante de l'image théorique en demi-teintes (70) dotée de n niveaux de luminosité est définie, et
a5) pour la transformation en valeurs seuils, les niveaux de luminosité de la zone représentée sont comparés à la valeur seuil de demi-teintes de la cellule de trame de base associée de l'au moins une trame de base de demi-teintes, la zone représentée est divisée en fonction du résultat de la comparaison en sous-zones (94,96) auxquelles une des k expressions de la propriété optique est respectivement associée, et chacune des sous-zones est pourvue de l'expression associée de la propriété optique.

15. Agencement de représentations micro-optique (30) pour papiers de sécurité, documents de valeur et autres supports de données, pouvant être fabriqué selon une des revendications 1 à 14, comportant un agencement d'image de trame pour la représentation d'une image théorique en demi-teintes (70) dotée de n > 2 niveaux de luminosité, comportant :
- une image de motif (90) qui est divisée en une pluralité de cellules de trame de motif disposées périodiquement ou du moins localement périodiquement (92,92-1,92-2,92-3) dans lesquelles des zones respectivement représentées et transformées en valeurs seuils de l'image théorique en demi-teintes (70) sont disposées,
- une trame d'observation constituée d'une pluralité d'éléments de trame d'observation (22) qui, en cas d'observation de l'image de motif (90), reconstruit l'image théorique en demi-teintes (70) avec n niveaux de luminosité à partir des zones représentées et transformées en valeurs seuils disposées dans les cellules,
- les zones représentées et transformées en valeurs seuils de l'image théorique en demi-teintes (70) sont réalisées avec des sous-zones (94,96) qui contiennent une de k expressions d'une propriété optique prédéfinie, sachant que 1 < k < n, et, suite à la transformation en valeurs seuils, la fréquence de la survenance d'une partie d'image de l'image théorique en demi-teintes (70) dans les cellules de trame de motif (92,92-1,92-2,92-3) est définie par le niveau de luminosité de cette partie de l'image dans l'image théorique en demi-teintes.

16. Support de données (10), en particulier élément de valeur ou de sécurité, comportant un agencement de représentation micro-optique (30) fabriqué selon une des revendications 1 à 14 ou un agencement de représentation micro-optique (90) selon la revendication 15.
